(19) Europäisches Patentamt
European Patent Office
Office européen des brevets

(11) **EP 4 456 303 A1**

(12) **EUROPEAN PATENT APPLICATION**
published in accordance with Art. 153(4) EPC

(43) Date of publication:
**30.10.2024 Bulletin 2024/44**

(21) Application number: **22950697.7**

(22) Date of filing: **15.07.2022**

(51) International Patent Classification (IPC):
**H01M 50/375** (2021.01)   **H01M 50/20** (2021.01)
**H01M 50/30** (2021.01)   **H01M 50/244** (2021.01)

(52) Cooperative Patent Classification (CPC):
**H01M 10/613; H01M 10/658; H01M 50/20;**
**H01M 50/244; H01M 50/289; H01M 50/30;**
**H01M 50/375;** Y02E 60/10

(86) International application number:
**PCT/CN2022/105942**

(87) International publication number:
**WO 2024/011578 (18.01.2024 Gazette 2024/03)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Contemporary Amperex Technology**
**Co., Limited**
**Ningde, Fujian 352100 (CN)**

(72) Inventors:
• **KE, Jianhuang**
**Ningde, Fujian 352100 (CN)**
• **CHEN, Xiaobo**
**Ningde, Fujian 352100 (CN)**
• **LI, Yao**
**Ningde, Fujian 352100 (CN)**
• **CHEN, Shilong**
**Ningde, Fujian 352100 (CN)**

(74) Representative: **Ran, Handong et al**
**Maucher Jenkins**
**Seventh Floor Offices**
**Artillery House**
**11-19 Artillery Row**
**London SW1P 1RT (GB)**

(54) **BATTERY AND ELECTRIC DEVICE**

(57)     Provided in the embodiments of the present application are a battery and an electric device. The battery comprises a box body, a battery unit and a protective member, wherein the box body comprises a first wall; the battery unit is accommodated in the box body, and the battery unit is provided with a pressure relief mechanism, which is used for forming a pressure relief hole, so as to release a substance in the battery unit; the protective member is accommodated in the box body, and at least part of the protective member is located between the first wall and the pressure relief mechanism and is used for covering the pressure relief hole in the axial direction of the pressure relief hole; and the minimum size of the part of the protective member that covers the pressure relief hole in the axial direction is D, and the flow of a gas of the battery unit that is released via the pressure relief hole is G, D and G satisfying: $2 \times 10^{-3}$ mm • s/L ≤ D/G ≤ $3.3 \times 10^{-1}$ mm • s/L. By means of the embodiments of the present application, when the thermal protection requirement is taken into consideration, the redundancy of the size design of a protective member can be reduced, thereby reducing the loss of an energy density of a battery, and improving the safety of the battery.

FIG. 4

EP 4 456 303 A1

**Description**

**TECHNICAL FIELD**

This application relates to the field of battery technologies, and more specifically, to a battery and an electric apparatus.

**BACKGROUND**

Batteries are widely used in electronic devices such as mobile phones, notebook computers, battery carts, electric vehicles, electric aircrafts, electric ships, electric toy cars, electric toy ships, electric toy aircrafts, and electric tools.

How safety of the battery is improved is a research direction in battery technologies.

**SUMMARY**

This application provides a battery and an electric apparatus to improve safety thereof.

According to a first aspect, an embodiment of this application provides a battery including a box, a battery unit, and a protective member. The box includes a first wall. The battery unit is accommodated within the box, where the battery unit is provided with a pressure relief mechanism, and the pressure relief mechanism is configured to form a pressure relief hole for releasing substances inside the battery unit. The protective member is accommodated within the box, where at least a portion of the protective member is located between the first wall and the pressure relief mechanism and configured to cover the pressure relief hole in an axial direction of the pressure relief hole. The portion of the protective member covering the pressure relief hole in the axial direction has a minimum dimension of D in the axial direction, and a flow rate of gas released from the battery unit through the pressure relief hole is G, where D and G satisfy $2 \times 10^{-3}$ mm•s/L$\leq$D/G$\leq$3.3$\times 10^{-1}$ mm•s/L.

A higher flow rate G of gas generated by the battery unit during thermal runaway means a greater thermal impact caused by the gas on the protective member and a larger D required for the protective member. Conversely, a lower flow rate G of gas generated by the battery unit during thermal runaway means a smaller thermal impact caused by the gas on the protective member and a smaller D required for the protective member. When the flow rate G is given, it is necessary to ensure a minimum value of D so as to reduce the risk of the protective member being pierced and reduce heat transferred to the first wall. Certainly, a larger value of D means a larger volume and weight of the protective member. When the flow rate G is given, a maximum value of D can be limited to reduce redundancy designed for the dimension of the protective member. In the foregoing technical solution, the value of D/G is limited to $2 \times 10^{-3}$ mm•s/L to $3.3 \times 10^{-1}$ mm•s/L to reduce redundancy designed for the dimension of the protective member while thermal protection requirements are met, thereby reducing energy density loss of the battery and improving safety of the battery.

In some embodiments, D and G satisfy $2 \times 10^{-3}$ mm•s/L$\leq$D/G$\leq$2$\times 10^{-1}$ mm•s/L.

In some embodiments, the value of D is 0.5 mm to 5 mm, so that redundancy designed for the dimension of the protective member is reduced while thermal protection requirements are met, thereby reducing energy density loss of the battery, reducing the forming difficulty of the protective member, and improving safety of the battery.

In some embodiments, a dimension of the protective member is larger than a dimension of the pressure relief hole in any direction perpendicular to the axial direction. The protective member having a larger dimension than the pressure relief hole effectively blocks gas and reduces the risk of the gas directly hitting the first wall, thereby improving safety.

In some embodiments, volumetric energy density of the battery unit is E, where D and E satisfy $1 \times 10^{-3}$ mm•L/Wh$\leq$D/E$\leq$1$\times 10^{-2}$ mm•L/Wh.

The volumetric energy density E of the battery unit is generally positively correlated with the flow rate G. The volumetric energy density E of the battery unit is easier to determine than the flow rate G. In the foregoing technical solution, the flow rate G is indirectly indicated by the volumetric energy density E, and the value of D is limited by the volumetric energy density E, so that redundancy designed for the dimension of the protective member is reduced while thermal protection requirements are met, thereby reducing energy density loss of the battery and reducing the design difficulty of the protective member.

In some embodiments, D and E satisfy $1 \times 10^{-3}$ mm•L/Wh$\leq$D/E$\leq$6$\times 10^{-3}$ mm•L/Wh.

In some embodiments, a dimension of the pressure relief hole in a maximum-dimension direction of the pressure relief hole perpendicular to the axial direction is k, and a dimension of the protective member in the maximum-dimension direction is K, where k, K, and G satisfy K>k and (K/k)/G$\geq$3$\times 10^{-3}$ s/L

A higher flow rate G of the gas generated during thermal runaway of the battery unit means a larger thermal impact caused by the gas released from the battery unit on the protective member, a higher risk of the gas and other substances carried therein splashing onto the portion of the first wall not covered by the protective member, and a higher temperature of the portion of the first wall not covered by the protective member. In the foregoing technical solution, the dimension relationship between the protective member and the pressure relief hole in the maximum-dimension direction is limited based on the flow rate G of the gas generated during thermal runaway of the battery unit, to make the temperature of the portion of the first wall not covered by the protective member remain within a certain range so as to reduce the risk of damage to the first wall.

In some embodiments, k, K, and G satisfy $(K/k)/G \geq 8 \times 10^{-3}$ s/L.

In some embodiments, k, K, and G satisfy $(K/k)/G \leq 20$ s/L. This technical solution can reduce redundancy designed for the dimension of the protective member, thereby reducing the energy density loss of the battery.

In some embodiments, a minimum distance between the protective member and the pressure relief hole in the axial direction is h, where h and D satisfy $0.2 \leq h/D \leq 250$. The value of h/D is limited to 0.2 to 250 so as to reduce redundancy designed for the dimension of the protective member while thermal protection requirements are met, thereby reducing energy density loss of the battery and improving safety of the battery.

In some embodiments, the protective member is a flat plate structure, and a thickness direction of the protective member is parallel to the axial direction. A flat plate structure is easy to form.

In some embodiments, in a maximum-dimension direction of the pressure relief hole perpendicular to the axial direction, thickness of the protective member gradually decreases from the middle towards two ends, and a thickness direction of the protective member is parallel to the axial direction.

A thickest portion of the protective member covers at least a portion of the pressure relief hole in the axial direction. The thickest portion of the protective member is opposite the pressure relief hole to withstand great thermal impact, reducing the risk of the protective member being pierced. Two ends of the protective member experience small thermal impact and therefore can have a small thickness, reducing the weight and volume of the protective member and increasing the energy density of the battery.

In some embodiments, the protective member includes a base region and a reinforced region connected to the base region, and a dimension of the reinforced region in the axial direction is larger than a dimension of the base region in the axial direction. In the axial direction, the reinforced region covers at least a portion of the pressure relief hole. The reinforced region is opposite the pressure relief hole to withstand great thermal impact, reducing the risk of the protective member being pierced.

In some embodiments, in the axial direction, the reinforced region completely covers the pressure relief hole. The reinforced region can withstand great thermal impact, reducing the risk of the protective member being pierced. The base region is not opposite the pressure relief hole in the axial direction and therefore can have a small thickness, reducing the weight and volume of the protective member and increasing the energy density of the battery.

In some embodiments, in a maximum-dimension direction of the pressure relief hole perpendicular to the axial direction, a dimension of the protective member is K, and a dimension of the reinforced region is $K_1$. K, $K_1$, and G satisfy $K > K_1$ and $(K/K_1)/G \leq 2 \times 10^{-1}$ s/L.

A higher flow rate G of the gas generated during thermal runaway of the battery unit means a larger thermal impact caused by the gas released from the battery unit on the protective member and a higher requirement of the protective member on the dimension of the reinforced region. The inventors limit the value of $(K/K_1)/G$ to be less than or equal to $2 \times 10^{-1}$ s/L to allow the reinforced region and the base region to effectively block high-temperature and high-speed substances, so as to reduce heat transferred to the first wall and lower the temperature of the first wall.

In some embodiments, both the reinforced region and the base region are flat plate structures, and a thickness direction of the reinforced region and a thickness direction of the base region are both parallel to the axial direction.

In some embodiments, a dimension of the reinforced region in the axial direction is D, and a dimension of the base region in the axial direction is d. In a maximum-dimension direction of the pressure relief hole perpendicular to the axial direction, a dimension of the pressure relief hole is k, and a dimension of the reinforced region is Ki. D, d, k, and $K_1$ satisfy $0.04 \leq (K_1/k)/(D/d) \leq 300$.

As the value of $K_1/k$ increases, the reinforced region withstands more thermal impact during thermal runaway of the battery unit. As a result, the base region needs to take less protection against thermal runaway. Consequently, the value of Did may increase. In other words, the thickness of the base region needs to decrease. As the value of $K_1/k$ decreases, the base region needs to take more protection against thermal runaway. Correspondingly, the value of Did may decrease. In other words, the thickness of the base region needs to increase. When $K_1/k$ is small enough, the base region needs to take much protection against thermal runaway, and Did has a minimum value, meaning that d has a maximum value to meet the thermal runaway preventing requirements of the base region. When $K_1/k$ is large enough, the base region needs to take little protection against thermal runaway, and Did has a maximum value, meaning that d has a minimum value. The value of $(K_1/k)/(D/d)$ is limited to 0.04 to 300 so as to reduce redundancy designed for the dimension of the protective member while thermal protection requirements are met, thereby reducing energy density loss of the battery and improving safety of the battery.

In some embodiments, the protective member includes a first protective plate and a second protective plate stacked in the axial direction. A portion of the first protective plate that overlaps the second protective plate in the axial direction, together with the second protective plate, forms the reinforced region, and a portion of the first protective plate that does not overlap the second protective plate in the axial direction forms the base region. The first protective plate and the second protective plate are stacked together to form the protective member with varying thicknesses, thereby simplifying the forming process of the protective member.

In some embodiments, the second protective plate is provided on a side of the first protective plate facing towards the pressure relief mechanism. This technical solution can improve the flatness of a side of the protective member facing away from the pressure relief mechanism, facilitating the fixation of the protective member to other components.

In some embodiments, multiple second protective plates are provided, and the multiple second protective plates are spaced apart.

In some embodiments, the multiple second protective plates are spaced apart in a maximum-dimension direction of the pressure relief hole perpendicular to the axial direction.

In some embodiments, both the first protective plate and the second protective plate are flat plate structures, and a thickness direction of the first protective plate and a thickness direction of the second protective plate are both parallel to the axial direction.

In some embodiments, the first protective plate is a flat plate structure, and a thickness direction of the first protective plate is parallel to the axial direction. In a maximum-dimension direction of the pressure relief hole perpendicular to the axial direction, a dimension of the second protective plate in the axial direction gradually decreases from the middle towards two ends.

A largest portion of the second protective plate in the axial direction may be opposite the pressure relief hole to withstand great thermal impact, reducing the risk of the protective member being pierced. Two ends of the second protective plate experience small thermal impact and therefore can have a small thickness, reducing the weight and volume of the second protective plate and increasing the energy density of the battery.

In some embodiments, a material of the second protective plate is different from a material of the first protective plate. With the first protective plate and the second protective plate made of different materials, a protective member with better thermal impact resistance can be composited by combining the features of different materials. Compared with the first protective plate and the second protective plate made of the same material, the first protective plate and the second protective plate made of different materials allow for greater versatility in the structure of the protective member.

In some embodiments, the first wall is located above or below the battery unit.

In some embodiments, melting point of the protective member is higher than 1000°C. The protective member has a high melting point, making it less likely to melt under thermal impact, thereby allowing the protective member to have good thermal impact resistance and reducing the risk of the protective member being pierced.

In some embodiments, melting point of the protective member is higher than melting point of the first wall. The protective member has better thermal impact resistance than the first wall, providing the thermal protection function and reducing the risk of damage to the first wall.

In some embodiments, the protective member is fixed to the first wall. The first wall can secure the protective member, reducing the risk of the protective member moving under the impact of high-temperature and high-speed gas, reducing the probability of impact damage to the protective member, and decreasing the failure risk of the protective member.

In some embodiments, the protective member is adhered, welded, fastener-connected, or snap-fit to the first wall.

According to a second aspect, an embodiment of this application provides an electric apparatus including the battery according to any one of the embodiments of the first aspect, where the battery is configured to supply electric energy.

## BRIEF DESCRIPTION OF DRAWINGS

To describe the technical solutions of the embodiments of this application more clearly, the following briefly describes the accompanying drawings required for describing the embodiments of this application. Apparently, the accompanying drawings described below show merely some embodiments of this application, and persons of ordinary skills in the art may still derive other drawings from the accompanying drawings without creative efforts.

FIG. 1 is a schematic structural diagram of a vehicle according to some embodiments of this application;
FIG. 2 is a schematic exploded view of a battery according to some embodiments of this application;
FIG. 3 is a schematic structural diagram of a battery according to some embodiments of this application;
FIG. 4 is another schematic structural diagram of the battery in FIG. 3, where a pressure relief mechanism of a battery unit of the battery is in an actuated state;
FIG. 5 is an enlarged schematic view at circle A of the battery in FIG. 4;
FIG. 6 is a schematic structural diagram of a battery unit of a battery according to some embodiments of this application;
FIG. 7 is a schematic structural diagram of a battery according to some embodiments of this application;
FIG. 8 is a schematic structural diagram of a battery according to some other embodiments of this application;
FIG. 9 is a schematic structural diagram of a battery according to some other embodiments of this application;
FIG. 10 is an enlarged schematic view at block B in FIG. 9;
FIG. 11 is a schematic structural diagram of a battery according to some other embodiments of this application;
FIG. 12 is a schematic structural diagram of a battery according to some other embodiments of this application;
FIG. 13 is a schematic structural diagram of a battery according to some other embodiments of this application;
FIG. 14 is a schematic structural diagram of a battery according to some other embodiments of this application; and
FIG. 15 is a schematic structural diagram of a battery according to some other embodiments of this application.

In the accompanying drawings, the figures are not necessarily drawn to scale.

## DESCRIPTION OF EMBODIMENTS

To make the objectives, technical solutions, and advantages of embodiments of this application clearer, the following clearly describes the technical solutions in the embodiments of this application with reference to the accompanying drawings in the embodiments of this application. Apparently, these embodiments described are some rather than all embodiments of this application. All other embodiments obtained by a person of ordinary skills in the art based on the embodiments of this application without creative efforts shall fall within the protection scope of this application.

Unless otherwise defined, all technical and scientific terms used in this application shall have the same meanings as commonly understood by those skilled in the art to which this application relates. The terms used in the specification of this application are intended to merely describe the specific embodiments rather than to limit this application. The terms "include", "comprise", and any variations thereof in the specification and claims of this application as well as the foregoing description of drawings are intended to cover non-exclusive inclusions. In the specification, claims, or accompanying drawings of this application, the terms "first", "second", and the like are intended to distinguish between different objects rather than to indicate a particular order or relative importance.

Reference to "embodiment" in this application means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments.

In the description of this application, it should be noted that unless otherwise specified and defined explicitly, the terms "mount", "connect", "join", and "attach" should be understood in their general senses. For example, they may refer to a fixed connection, a detachable connection, or an integral connection, and may refer to a direct connection, an indirect connection via an intermediate medium, or an internal communication between two elements. Persons of ordinary skills in the art can understand specific meanings of these terms in this application as appropriate to specific situations.

The term "and/or" in this application is only an associative relationship for describing associated objects, indicating that three relationships may be present. For example, A and/or B may indicate three cases: presence of only A; presence of both A and B; and presence of only B. In addition, the character "/" in this application generally indicates an "or" relationship between contextually associated objects.

In the embodiments of this application, the same reference signs denote the same members. For brevity, in different embodiments, detailed descriptions of the same members are not repeated. It should be understood that, as shown in the accompanying drawings, sizes such as thickness, length, and width of various members and sizes such as thickness, length, and width of integrated devices in the embodiments of this application are merely for illustrative purposes and should not constitute any limitations on this application.

In this application, "a plurality of" means more than two (inclusive).

The term "parallel" in this application not only includes the absolutely parallel case, but also includes the approximately parallel case in the conventional understanding of engineering; likewise, the term "perpendicular" not only includes the absolutely perpendicular case, but also includes the approximately perpendicular case in the conventional understanding of engineering.

In this application, the battery unit may include a lithium-ion battery unit, a lithium-sulfur battery unit, a sodium-lithium-ion battery unit, a sodium-ion battery unit, a magnesium-ion battery unit, or the like. This is not limited in the embodiments of this application. The battery unit may be cylindrical, flat, cuboid, or of other shapes. This is not limited in the embodiments of this application either.

The battery mentioned in the embodiments of this application is a single physical module that includes one or more battery units for providing a higher voltage and capacity. A battery typically includes a box configured to enclose one or more battery units. The box can prevent liquids or other foreign matter from affecting charging or discharging of the battery unit.

For the development of battery technologies, many design factors need to be considered, for example, performance parameters such as energy density, cycle life, discharge capacity, and charge and discharge rate, as well as safety of the battery.

The pressure relief mechanism in the battery unit greatly influences the safety of the battery unit. For example, when a short circuit, overcharging, or the like occurs, thermal runaway may be caused inside the battery unit, resulting in a sudden rise in pressure. In this case, the pressure relief mechanism can be actuated to release the internal pressure to the outside, thus preventing the battery unit from exploding and catching fire.

The pressure relief mechanism can be an element or component of the battery unit that is actuated when certain conditions are met. For example, the pressure relief mechanism can be an element or component that can be actuated to release internal pressure and/or internal substance when the internal pressure or internal temperature of the battery unit reaches a predetermined threshold. The threshold design varies with a design requirement. Moreover, the threshold may depend on a material used for one or more of the positive electrode plate, negative electrode plate, electrolyte, and separator in the battery unit.

The pressure relief mechanism may be in a form of an explosion-proof valve, a gas valve, a pressure relief valve, a safety valve, or the like, and may specifically use a pressure-sensitive element or structure. That is, when the internal pressure of the battery unit reaches the predetermined threshold, the pressure relief mechanism activates, or a weak region of the pressure relief mechanism ruptures, thereby forming a pressure relief hole for releasing the internal pressure. Alternatively, the pressure relief mechanism may be a temperature-sensitive element or structure. That is, when the internal temperature of the battery unit reaches the predetermined threshold, the pressure relief mechanism activates, thereby forming a pressure relief hole for releasing the internal pressure. Alternatively, the pressure relief mechanism can be an actuating component. For example, the pressure relief mechanism can be actuated upon receiving a control signal from the battery.

The pressure relief mechanism can alternatively have other forms. For example, the pressure relief mechanism can be a structure of low strength on the housing of the battery unit. The structure of low strength cracks or deforms when the battery unit experiences thermal runaway, forming the pressure relief hole for releasing internal pressure. For example, the pressure relief mechanism can be a weld mark on the housing of the battery unit.

"Actuate" mentioned in this application means that the pressure relief mechanism implements an action or is activated to a given state, so that the internal pressure and/or internal substances of the battery unit can be relieved. The action that the pressure relief mechanism is put into may include but is not limited to, for example, cracking, breaking, tearing, or opening at least part of the pressure relief mechanism. When the pressure relief mechanism is actuated, the high-temperature and high-speed substances inside the battery unit are discharged as emissions from an actuated site. In this way, the battery unit can relieve its pressure under controllable pressure, thereby avoiding more serious potential incidents.

The emissions from the battery unit mentioned in this application include but are not limited to electrolyte, fragments of positive and negative electrode plates and separator caused by dissolution or breaking, high-temperature and high-speed gases and flames produced in reaction, and the like.

When the battery unit experiences thermal runaway, the battery unit releases the emissions into the box. The box is also provided with a pressure relief mechanism. The pressure relief mechanism of the box is actuated to release the emissions out of the box at a designated location of the box.

The inventors have noticed that the emissions released from the battery unit are in a high-temperature and high-speed state. If these emissions hit the box, the box may be damaged. As a result, the emissions are not released through the pressure relief mechanism of the box but through a damaged part of the box, posing a risk of catching fire outside the battery and imposing safety hazards.

After discovering the aforementioned problem, the inventors have attempted to provide a protective member at a position opposite a pressure relief mechanism of the battery unit. The protective member can block the high-temperature and high-speed substances released by the battery unit, reducing the thermal impact on the box, reducing the risk of box damage, and improving safety.

The inventors have found through research that in the event of thermal runaway in the battery unit, if the gas production of the battery unit is too intense, a thin protective member may be pierced by the high-temperature and high-speed gas released by the battery unit. This leads to perforations on the protective member, with the high-temperature and high-speed gas passing through these perforations to hit the box, potentially causing damage to the box. In order to reduce the risk of the protective member being pierced by the gas, the inventors have attempted to increase the dimensions of the protective member. However, increasing the dimensions of the protective member decreases the energy density of the battery. If the dimensions of the protective member are excessively designed, waste of energy density is caused.

In view of this, the inventors provide a technical solution in which the dimensions of the protective member are set based on the flow rate of gas released by the battery unit, to reduce the risk of the protective member being pierced and minimize the waste of battery energy density.

The technical solution described in the embodiments of this application is applicable to electric apparatuses using a battery.

The electric apparatus may be a vehicle, a mobile phone, a portable device, a notebook computer, a ship, a spacecraft, an electric toy, an electric tool, or the like. The vehicle may be a fossil fuel vehicle, a natural gas vehicle, or a new energy vehicle. The new energy vehicle may be a battery electric vehicle, a hybrid electric vehicle, a range-extended electric vehicle, or the like. The spacecraft includes an aircraft, a rocket, a space shuttle, a spaceship, and the like. The electric toy includes a fixed or mobile electric toy, for example, a game console, an electric toy car, an electric toy ship, and an electric toy aircraft. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer. The embodiments of this application impose no special limitation on the foregoing electric apparatus.

For ease of description, the electric apparatus being a vehicle is used as example for description of the following embodiments.

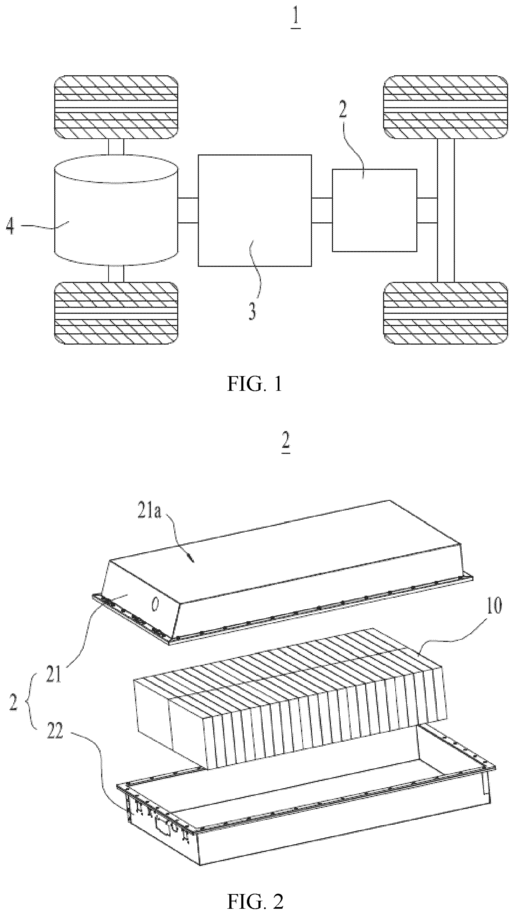

FIG. 1 is a schematic structural diagram of a vehicle according to some embodiments of this application.

As shown in FIG. 1, the vehicle 1 is provided with a battery 2 inside, and the battery 2 may be disposed at the bottom or in the front or at the rear of the vehicle 1. The battery 2 may be configured to supply power to the vehicle 1. For example, the battery 2 may be used as an operational power source for the vehicle 1.

The vehicle 1 may further include a controller 3 and a motor 4, where the controller 3 is configured to control the battery 2 to supply power to the motor 4, for example, to satisfy power needs of start, navigation, and driving of the vehicle 1.

In some embodiments of this application, the battery 2 can be used as not only the operational power source for the vehicle 1 but also a driving power source for the vehicle 1, replacing or partially replacing fossil fuel or natural gas to provide driving traction for the vehicle 1.

FIG. 2 is a schematic exploded view of a battery according to some embodiments of this application.

As shown in FIG. 2, the battery 2 includes a box 20 and a battery unit 10, and the battery unit 10 is accommodated in the box 20.

The box 20 is configured to accommodate the battery unit 10, and the box 20 may have various structures. In some embodiments, the box 20 may include a first box portion 21 and a second box portion 22. The first box portion 21 and the second box portion 22 fit together. The first box portion 21 and the second box portion 22 jointly define an accommodating space for accommodating the battery unit 10.

In some embodiments, the second box portion 22 may be a hollow structure with one end open, the first box portion 21 is a plate-shaped structure, and the first box portion 21 covers the opening side of the second box portion 22 so as to form the box 20 having the accommodating space. In some other embodiments, both the first box portion 21 and the second box portion 22 may be hollow structures with one end open, and the opening side of the first box portion 21 covers the opening side of the second box portion 22 so as to form the box 20 having the accommodating space.

The first box portion 21 and the second box portion 22 may be in various shapes, such as cylinder and cuboid.

In order to improve the air-tightness after the connection of the first box portion 21 and the second box portion 22, a sealing element such as sealing gum or sealing ring may also be disposed between the first box portion 21 and the second box portion 22.

Assuming that the first box portion 21 fits on the top of the second box portion 22, the first box portion 21 may also be referred to as an upper cover, and the second box portion 22 may also be referred to as a lower box 20.

There may be one or more battery units 10 in the battery 2. If multiple battery units 10 are provided, the multiple battery units 10 may be connected in series, parallel, or series-parallel, where being connected in series-parallel means a combination of series and parallel connections of the multiple battery units 10. The multiple battery units 10 may be directly connected in series, parallel, or series-parallel, and then an entirety of the multiple battery units 10 is accommodated in the box 20; or certainly, the multiple battery units 10 may be connected in series, parallel, or series-parallel first to form a battery module and then multiple battery modules are connected in series, parallel, or series-parallel to form an entirety, which is accommodated in the box 20.

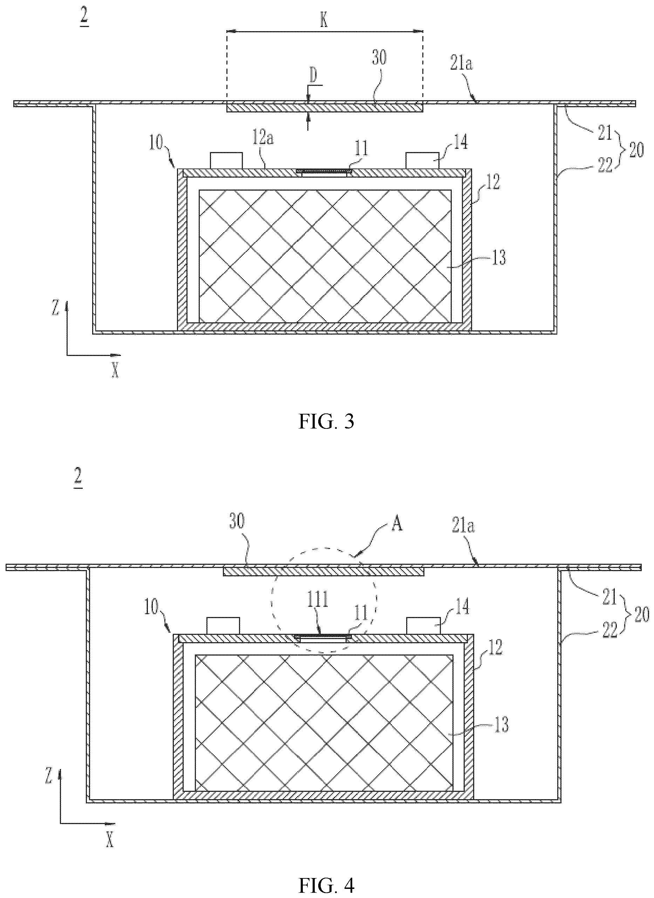

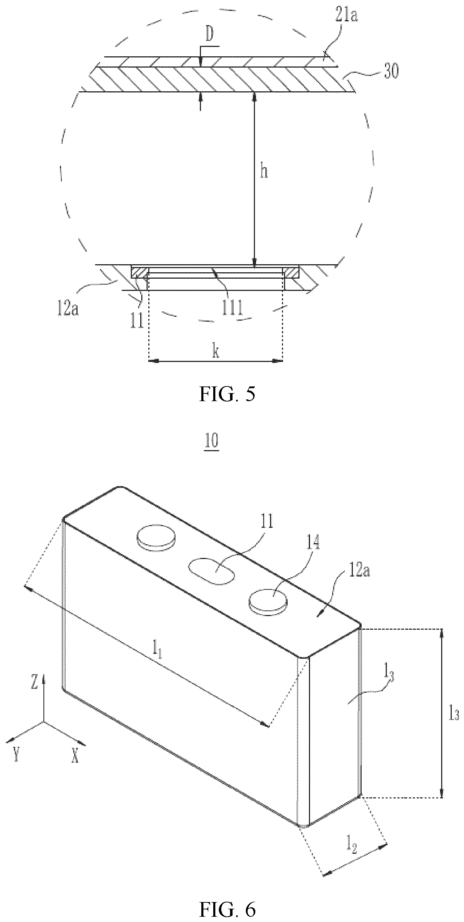

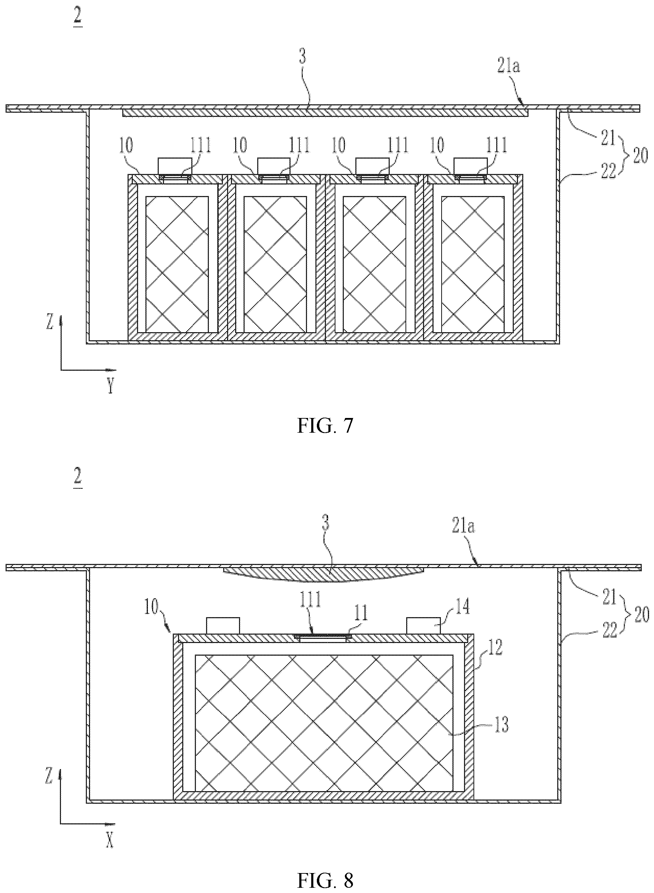

FIG. 3 is a schematic structural diagram of a battery according to some embodiments of this application. FIG. 4 is another schematic structural diagram of the battery in FIG. 3, where a pressure relief mechanism of a battery unit of the battery is in an actuated state. FIG. 5 is an enlarged schematic view at circle A of the battery in FIG. 4. FIG. 6 is a schematic structural diagram of a battery unit of a battery according to some embodiments of this application. FIG. 7 is a schematic structural diagram of a battery according to some embodiments of this application.

As shown in FIG. 3 to FIG. 7, the battery 2 in the embodiments of this application includes a box 20, a battery unit 10, and a protective member 30. The box 20 includes a first wall 21a. The battery unit 10 is accommodated within the box 20, where the battery unit 10 is provided with a pressure relief mechanism 11, and the pressure relief mechanism 11 is configured to form a pressure relief hole 111 for releasing substances inside the battery unit 10. The protective member 30 is accommodated within the box 20, where at least a portion of the protective member 30 is located between the first wall 21a and the pressure relief mechanism 11 and configured to cover the pressure relief hole 111 in an axial direction Z of the pressure relief hole 111. The portion of the protective member 30 covering the pressure relief hole 111 in the axial direction Z has a minimum dimension of D in the axial direction Z, and a flow rate of gas released from the battery unit 10 through the pressure relief hole 111 is G, where D and G satisfy $2\times10^{-3}$ mm•s/L$\leq$D/G$\leq$3.3$\times10^{-1}$ mm•s/L.

The box 20 can be an outer envelope of the battery 2, with the battery unit 10 located within the outer envelope. The box 20 can prevent liquids or other foreign matter from affecting charging or discharging of the battery unit 10.

The first wall 21a of the box 20 is a wall of the box 20 opposite the pressure relief mechanism 11 in the axial direction Z. The first wall 21a can be the top wall of the box 20 located above the battery unit 10, the bottom wall of the box 20 located below the battery unit 10, or the side wall of the box 20 located on a side of the battery unit 10. Certainly, the first wall 21a can alternatively be located at another position of the box 20. For example, the first wall 21a can be a part of the first box portion or a part of the second box portion.

The shape of the first wall 21a is not limited in this embodiment. For example, the first wall 21a can be flat or curved, or in any other shape.

One or multiple battery units 10 may be provided. For example, multiple battery units 10 are provided. Optionally, the pressure relief mechanisms 11 of the multiple battery units 10 all face towards the first wall 21a.

The battery unit 10 includes one or more battery cells. A battery cell is the smallest unit that constitutes a battery and can be independently charged and discharged. The battery cell can be a cylindrical battery cell, a prismatic battery cell, a pouch battery cell, or another battery cell.

The battery cell includes a battery cell housing, an electrode assembly 13, an electrolyte, and other functional components. The electrode assembly 13 and the electrolyte are accommodated within the battery cell housing.

For example, the electrode assembly includes a positive electrode plate, a negative electrode plate, and a separator. Working of the battery cell mainly relies on migration of metal ions between the positive electrode plate and the negative electrode plate. The positive electrode plate includes a positive electrode current collector and a positive electrode active material layer. The positive electrode active material layer is applied on a surface of the positive electrode current collector. The positive electrode current collector includes a positive electrode current collecting portion and a positive tab. The positive electrode current collecting portion is coated with the positive electrode active material layer, and the positive tab is coated with no positive electrode active material layer. A lithium-ion battery cell is used as an example, for which, the positive electrode current collector may be made of aluminum, the positive electrode active material layer includes a positive electrode active material, and the positive electrode active material may be lithium cobaltate, lithium iron phosphate, ternary lithium, lithium manganate, or the like. The negative electrode plate includes a negative electrode current collector and a negative electrode active material layer. The negative electrode active material layer is applied on a surface of the negative electrode current collector. The negative electrode current collector includes a negative electrode current collecting portion and a negative tab. The negative electrode current collecting portion is coated with the negative electrode active material layer, and the negative tab is coated with no negative electrode active material layer. The negative electrode current collector may be made of copper, and the negative electrode active material layer includes a negative electrode active material which may be carbon, silicon, or the like. A material of the separator may be PP (polypropylene, polypropylene), PE (polyethylene, polyethylene), or the like. The battery cell housing can be a hard housing. For example, the battery cell housing may be made of aluminum alloy. Alternatively, the battery cell housing can be a soft housing. For example, the battery cell housing may be made of aluminum-plastic film.

In some examples, the battery unit 10 can be a battery cell, and the housing 12 of the battery unit 10 is the same as the battery cell housing. The pressure relief mechanism 11 can be provided on the housing 12. In some other examples, the battery unit 10 includes the housing 12 and multiple battery cells accommodated within the housing 12. The pressure relief mechanism 11 can be provided on the housing 12.

For example, the housing 12 of the battery unit 10 includes a second wall 12a facing towards the first wall 21a. The pressure relief mechanism 11 is installed on the second wall 12a. The second wall 12a is on a side of the electrode assembly 13 facing towards the first wall 21a. The pressure relief mechanism 11 can be fixed to the second wall 12a through welding, adhesion, or other means. Alternatively, the pressure relief mechanism 11 can be integrally formed with the second wall 12a.

When the battery unit 10 is in a normal state, no pressure relief hole 111 is formed on the pressure relief mechanism 11. The pressure relief mechanism 11 seals the electrode assembly 13 and electrolyte of the battery unit 10 inside the battery unit 10 to reduce the risk of electrolyte leakage. When thermal runaway occurs inside the battery unit 10, the pressure relief mechanism 11 is actuated to form the pressure relief hole 111. Substances inside the battery unit 10 can be released to the outside of the battery unit 10 through the pressure relief hole 111.

For example, the substances released through the pressure relief hole 111 include high-temperature and high-speed gas. The pressure relief hole 111 directs the flow direction of gas to allow a portion of the gas to be sprayed along the axial direction Z of the pressure relief hole 111.

The protective member 30 can be completely located between the first wall 21a and the pressure relief mechanism 11, or partially located between the first wall 21a and the pressure relief mechanism 11. For example, the first wall 21a and the pressure relief mechanism 11 are arranged along the axial direction Z, and at least a portion of the protective member 30 is located between the first wall 21a and the pressure relief mechanism 11 in the axial direction Z.

When the pressure relief mechanism 11 is actuated to form the pressure relief hole 111, the protective member 30 can cover the pressure relief hole 111 along the axial direction Z. In this embodiment, "the protective member 30 covers the pressure relief hole 111 in the axial direction Z of the pressure relief hole 111" means that the projection of the pressure relief hole 111 in the axial direction Z falls within the projection of the protective member 30 in the axial direction Z. The area of the projection of the protective member 30 in the axial direction Z can be greater than or equal to the area of the projection of the pressure relief hole 111 in the axial direction Z.

The protective member 30 can be a plate structure, a frame structure, or any other structure. For example, the protective member 30 can be a flat plate having uniform thickness or a plate having non-uniform thickness.

The protective member 30 can be an integral structure or a structure assembled from multiple sub-components.

The protective member 30 can be fixed to the first wall 21a, the battery unit 10, or other components within the box 20. This is not limited in the embodiments of this application.

The thermal impact resistance of the protective member 30 is superior to the thermal impact resistance of the first wall 21a. The thermal impact resistance refers to the capability of a material to withstand rapid temperature change without being damaged. In other words, when subjected to impact of the same high-temperature and high-speed substance, the protective member 30 is less prone to damage than the first wall 21a.

The portion of the protective member 30 covering the pressure relief hole 111 in the axial direction Z can be referred to as a protective portion, and the projection of the protective portion in the axial direction Z completely overlaps with the projection of the pressure relief hole 111 in the axial direction Z. The protective portion is more susceptible to impact from high-temperature and high-speed substances than other parts of the protective member 30.

The flow rate G is measured in liters per second (L/s). In this embodiment of this application, the flow rate G can be the average flow rate of the gas released through the pressure relief hole 111 of the battery unit 10.

The flow rate G of the gas released through the pressure relief hole 111 of the battery unit 10 is G=V/t, where V is the volume of gas generated by the battery unit 10 during thermal runaway at normal temperature and pressure (25°C, 1 atm) (measured in L), and t is the duration of the thermal runaway of the battery unit 10.

For example, the flow rate G of the battery unit 10 can be measured in the following method:

Test sample: fully charged battery unit 10.

Test environment: A sealed container (with no significant volume change or gas leakage during thermal runaway of the battery unit 10), having a space volume of $V_0$ within the container and a normal temperature and pressure (25°C, 1 atm) within the container.

Test procedure: The battery unit 10 is placed in the sealed container and thermal runaway of the battery unit 10 is triggered. The pressure relief mechanism 11 of the battery unit 10 is actuated, forming the pressure relief hole 111. Substances released by the battery unit 10 cause changes in the temperature and pressure inside the container. After 15 minutes of thermal runaway of the battery unit 10, the temperature inside the container stabilizes. At this point, the gas pressure inside the container is measured as Pi, and the temperature at the center point of the container is $T_0$. According to the equation for the ideal state, the volume of gas generated by the battery unit 10 during thermal runaway at normal temperature and pressure (25°C, 1 atm) can be calculated as:

$$V = \frac{P_1 * V_0}{RT_0} * 24.5 - V_0.$$

In the above test procedure, R is a gas constant, R=8.314 J/(mol·K), and 24.5 is a molar volume of gas at normal temperature and pressure. For the method for triggering thermal runaway of the battery unit 10, refer to GB 38031-2020 C.5.3.4. The center point of the container can be the geometric center of the internal cavity of the container.

The duration t of the thermal runaway of the battery unit 10 is the time interval from the beginning of the thermal runaway of the battery unit 10 to a time when the gas pressure inside the sealed container reaches a maximum value.

During thermal runaway of the battery unit 10, the released gas acts on the protective member 30. The protective member 30 is designed to reduce thermal impact on the first wall 21a and reduce heat transferred to the first wall 21a, reducing the risk of the first wall 21a being melted through, thereby improving the safety of the battery 2. A larger value of D means a lower risk of the protective member 30 being pierced by the gas and less heat transferred to the first wall 21a.

A higher flow rate G of gas generated by the battery unit 10 during thermal runaway means a greater thermal impact caused by the gas on the protective member 30 and a larger D required for the protective member 30. Conversely, a lower flow rate G of gas generated by the battery unit 10 during thermal runaway means a smaller thermal impact caused by the gas on the protective member 30 and a smaller D required for the protective member 30. When the flow rate G is given, it is necessary to ensure a minimum value of D so as to reduce the risk of the protective member 30 being pierced and reduce heat transferred to the first wall 21a. Certainly, a larger value of D means a larger volume and weight of the protective member 30. When the flow rate G is given, a maximum value of D can be limited to reduce redundancy designed for the dimension of the protective member 30 while thermal protection requirements are met, thereby reducing energy density loss of the battery 2.

The inventors have found through research that the value of D/G is limited to $2\times10^{-3}$ mm·s/L to $3.3\times10^{-1}$ mm·s/L to reduce redundancy designed for the dimension of the protective member 30 while thermal protection requirements are met, thereby reducing energy density loss of the battery 2 and improving safety of the battery 2.

In some embodiments, the value of D/G is $2\times10^{-3}$ mm·s/L, $5\times10^{-3}$ mm·s/L, $1\times10^{-2}$ mm·s/L, $5\times10^{-2}$ mm·s/L, $1\times10^{-1}$ mm·s/L, $2\times10^{-1}$ mm·s/L, $3\times10^{-1}$ mm·s/L, or $3.3\times10^{-1}$ mm·s/L.

In some embodiments, the protective member 30 can insulate heat to reduce heat transferred to the first wall 21a. During thermal runaway of the battery unit 10, the presence of the protective member 30 reduces the heat transferred to the first wall 21a. Therefore, in the embodiments of this application, the material requirements of the box 20 can be reduced.

For example, the box 20 can be made of a material that is not highly heat-resistant, such as polyester. Alternatively, the box 20 can be made of a relatively heat-resistant material such as aluminum, steel, or other metals. When the box 20 is made of a relatively heat-resistant material, the value of D/G can be adaptively reduced to decrease the occupied space and weight of the protective member 30, thereby improving the energy density of the battery 2.

In some embodiments, D and G satisfy $2\times10^{-3}$ mm·s/L$\leq$D/G$\leq 2\times10^{-1}$ mm·s/L.

In some embodiments, the value of D is 0.5 mm to 5 mm. Optionally, the value of D is 0.5 mm, 1 mm, 2 mm, 3 mm, 4 mm, or 5 mm.

A smaller value of D means a higher risk of the protective member 30 being pierced by gas. A larger value of D means a lower risk of the protective member 30 being pierced by gas, but the protective member 30 occupies more space of the battery 2 and has a heavier weight. The inventors limit the value of D to 0.5 mm to 5 mm, so that redundancy designed for the dimension of the protective member 30 is reduced while thermal protection requirements are met, thereby reducing energy density loss of the battery 2, reducing the forming difficulty of the protective member 30, and improving safety of the battery 2.

In some embodiments, the protective member 30 features thermo-insulation and has a lower thermal conductivity than the first wall 21a. The protective member 30 can insulate heat to reduce the heat transferred to the first wall 21a during thermal runaway of the battery unit 10. In some other alternative embodiments, the protective member 30 can alternatively have good thermal conductivity so that the protective member 30 can quickly dissipate heat to the surroundings, reducing heat accumulation and lowering the temperature of the first wall 21a.

In some embodiments, the material of the protective member 30 includes at least one of inorganic salt, inorganic ceramics, elemental metal, elemental carbon, and organic colloid.

In some examples, the inorganic salt includes silicate.

In some examples, the inorganic ceramic includes at least one of aluminum oxide, silicon oxide, boron carbide, boron nitride, silicon carbide, silicon nitride, and zirconium oxide.

In some examples, the elemental metal includes at least one of copper, iron, aluminum, tungsten, and titanium.

In some examples, the elemental carbon includes at least one of amorphous carbon and graphite.

In some examples, the organic colloid includes at least one of epoxy resin structural adhesive, acrylic ester structural adhesive, polyimide structural adhesive, maleimide structural adhesive, polyurethane structural adhesive, and acrylic structural adhesive.

In some embodiments, the protective member 30 is made of at least two of inorganic salt, inorganic ceramics, elemental metal, elemental carbon, and organic colloid.

The composite structure made of multiple materials can improve the thermal impact resistance and thermal insulation property of the protective member 30.

In some embodiments, the protective member 30 includes a carbon fiber board made of carbon fiber cloth and organic colloid.

In some embodiments, the protective member 30 includes a resin sheet made of inorganic ceramic powder and organic colloid.

In some embodiments, the protective member 30 includes a graphite layer and a metal layer that are stacked.

In some embodiments, the protective member 30 includes a composite fiber sheet made of carbon fiber and ceramic fiber.

In some embodiments, the protective member 30 includes a ceramic layer and a metal mesh connected to the ceramic layer.

In some embodiments, melting point of the protective member 30 is higher than 1000°C. The protective member 30 has a high melting point, making it less likely to melt under thermal impact, thereby allowing the protective member 30 to have good thermal impact resistance and reducing the risk of the protective member 30 being pierced.

In some embodiments, melting point of the protective member 30 is higher than 1500°C.

In some embodiments, melting point of the protective member 30 is higher than melting point of the first wall 21a. The protective member 30 has better thermal impact resistance than the first wall 21a, providing the thermal protection function and reducing the risk of damage to the first wall 21a.

In some embodiments, the protective member 30 is fixed to the first wall 21a. The first wall 21a can secure the protective member 30, reducing the risk of the protective member 30 moving under the impact of high-temperature and high-speed gas, reducing the probability of impact damage to the protective member 30, and decreasing the failure risk of the protective member 30.

In some embodiments, the protective member 30 is adhered, welded, fastener-connected, or snap-fit to the first wall 21a. Certainly, the protective member 30 can alternatively be fixed to the first wall 21a in other manners.

In some embodiments, the protective member 30 is provided on the inner surface of the first wall 21a.

In some embodiments, the first wall 21a is located above or below the battery unit 10. For example, as shown in FIG. 3, the first wall 21a is located above the battery unit 10.

In some embodiments, volumetric energy density of the battery unit 10 is E, where D and E satisfy $1\times10^{-3}$ mm·L/Wh$\leq$D/E$\leq1\times10^{-2}$ mm·L/Wh.

The volumetric energy density E is measured in Wh/L. E=C/Vi, where C is the capacity of the battery unit 10, and $V_1$ is the volume of the battery unit 10.

For example, the volume of the housing 12 of the battery unit 10 is used as the volume of the battery unit 10, excluding the volume of poles 14 of the battery unit 10 extending out of the housing 12. For example, the length, width, height of a housing 12 of a prismatic battery unit 10 are $l_1$, $l_2$, and $l_3$ respectively, and $V_1=l_1\times l_2\times l_3$.

In general, when the battery unit 10 undergoes thermal runaway, a larger value of E means more intense chain reactions inside the battery unit 10, and a higher temperature and a larger flow rate G of the gas released by the battery unit 10.

A higher volumetric energy density E of the battery unit 10 means a greater thermal impact caused by the gas on the protective member 30 and a larger D required for the protective member 30. Conversely, a lower volumetric energy density E of the battery unit 10 means a smaller thermal impact caused by the gas on the protective member 30 and a smaller D required for the protective member 30. When the volumetric energy density E is given, it is necessary to ensure a minimum value of D so as to reduce the risk of the protective member 30 being pierced and reduce heat transferred to the first wall 21a. Certainly, a larger value of D means a larger volume and weight of the protective member 30. When the volumetric energy density E is given, a maximum value of D can be limited to reduce redundancy designed for the dimension of the protective member 30 while thermal protection requirements are met, thereby reducing energy density loss of the battery 2.

The volumetric energy density E of the battery unit 10 is positively correlated with the flow rate G. The volumetric energy density E of the battery unit 10 is easier to determine than the flow rate G. After experiment and calculation, the inventors have attempted to use the volumetric energy density E to indirectly indicate the flow rate G and use the volumetric energy density E to limit the value of D, so as to reduce the design difficulty of the protective member 30.

Optionally, the value of D/E is $1\times10^{-3}$ mm·L/Wh, $2\times10^{-3}$ mm·L/Wh, $4\times10^{-3}$ mm·L/Wh, $6\times10^{-3}$ mm·L/Wh, $8\times10^{-3}$ mm·L/Wh, or $1\times10^{-2}$ mm·L/Wh.

In some embodiments, D and E satisfy $1\times10^{-3}$ mm·L/Wh$\leq$D/E$\leq6\times10^{-3}$ mm·L/Wh.

In some embodiments, a dimension of the protective member 30 is larger than a dimension of the pressure relief hole 111 in any direction perpendicular to the axial direction Z.

The gas released through the pressure relief hole 111 mainly flows along the axial direction Z of the pressure relief hole 111. Certainly, a part of the gas and substances like particles carried in the gas may also disperse to the surroundings after passing through the pressure relief hole 111. In this embodiment, the protective member 30 having a larger dimension than the pressure relief hole 111 effectively blocks gas and reduces the risk of the gas directly hitting the first wall 21a, thereby improving safety.

In some embodiments, a dimension of the pressure relief hole 111 in a maximum-dimension direction X of the pressure relief hole 111 perpendicular to the axial direction Z is k, and a dimension of the protective member 30 in the maximum-dimension direction X is K, where k, K, and G satisfy K>k and $(K/k)/G\geq3\times10^{-3}$ s/L.

Among multiple directions perpendicular to the axial direction Z, a dimension of the pressure relief hole 111 in one direction is greater than or equal to dimensions of the pressure relief hole 111 in other directions. The one direction is referred to as the maximum-dimension direction X of the pressure relief hole 111. The dimension K of the protective member 30 is the dimension of the protective member 30 in the maximum-dimension direction X of the pressure relief hole 111.

A higher flow rate G of the gas generated during thermal runaway of the battery unit 10 means a larger thermal impact caused by the gas released from the battery unit 10 on the protective member 30, a higher risk of the gas and other substances carried therein splashing onto the portion of the first wall 21a not covered by the protective member 30, and a higher temperature of the portion of the first wall 21a not covered by the protective member 30.

The inventors have limited the dimension relationship between the protective member 30 and the pressure relief hole 111 in the maximum-dimension direction X based on the flow rate G of the gas generated during thermal runaway of the battery unit 10, to make the temperature of the portion of the first wall 21a not covered by the protective member 30 remain within a certain range so as to reduce the risk of damage to the first wall 21a.

When the flow rate G of gas generated by the battery unit 10 during thermal runaway is low, the protective member 30 may have small dimensions to reduce the occupied space and weight of the protective member 30 in the battery 2, thereby increasing the energy density. When the flow rate G of gas generated by the battery unit 10 during thermal runaway is high, the protective member 30 may have large dimensions to increase the range of the first wall 21a covered by the protective member 30, so as to reduce the temperature of the first wall 21a.

In some embodiments, k, K, and G satisfy $(K/k)/G \geq 8 \times 10^{-3}$ s/L.

In some embodiments, k, K, and G satisfy $(K/k)/G \leq 20$ s/L. This embodiment can reduce redundancy designed for the dimension of the protective member 30, thereby reducing the energy density loss of the battery 2.

In some embodiments, the value of $(K/k)/G$ is $3 \times 10^{-3}$ s/L, $5 \times 10^{-3}$ s/L, $8 \times 10^{-3}$ s/L, $1 \times 10^{-2}$ s/L, $5 \times 10^{-2}$ s/L, $1 \times 10^{-1}$ s/L, $5 \times 10^{-1}$ s/L, 1 s/L, 5 s/L, 10 s/L, 15 s/L, or 20 s/L.

In some embodiments, a minimum distance between the protective member 30 and the pressure relief hole 111 in the axial direction Z is h, where h and D satisfy $0.2 \leq h/D \leq 250$.

When h is low enough, the temperature and speed of the gas acting on the protective member 30 barely drop, and the protective member 30 suffers large thermal impact. Correspondingly, D has a minimum value to ensure the protection effect. When h is high enough, the temperature and speed of the gas acting on the protective member 30 significantly drop, and the protective member 30 suffers small thermal impact. Correspondingly, D has a maximum value to ensure cost-effectiveness while thermal runaway preventing requirements are met, thereby reducing redundancy designed. After experiment and calculation, the inventors limit the value of h/D to 0.2 to 250 so as to reduce redundancy designed for the dimension of the protective member 30 while thermal protection requirements are met, thereby reducing energy density loss of the battery 2 and improving safety of the battery 2.

In some embodiments, multiple battery units 10 are provided in the box 20, and the protective member 30 is configured to cover pressure relief holes 111 of the multiple battery units 10 in the axial direction Z. No matter which battery unit 10 experiences thermal runaway, the protective member 30 can block high-temperature and high-speed substances, thereby reducing the risk of damage to the first wall 21a.

In some embodiments, the protective member 30 is a flat plate structure, and a thickness direction of the protective member 30 is parallel to the axial direction Z. For example, the thickness of the protective member 30 is D.

In some embodiments, the battery includes multiple battery units 10 arranged in sequence. For example, the arrangement direction Y of the multiple battery units 10 is perpendicular to the axial direction Z and the maximum-dimension direction X.

FIG. 8 is a schematic structural diagram of a battery according to some other embodiments of this application.

As shown in FIG. 8, in some embodiments, in a maximum-dimension direction X of the pressure relief hole 111 perpendicular to the axial direction Z, thickness of the protective member 30 gradually decreases from the middle towards two ends, and a thickness direction of the protective member 30 is parallel to the axial direction Z. A thickest portion of the protective member 30 covers at least a portion of the pressure relief hole 111 in the axial direction Z.

The thickest portion of the protective member 30 is opposite the pressure relief hole 111 to withstand great thermal impact, reducing the risk of the protective member 30 being pierced. Two ends of the protective member 30 experience small thermal impact and therefore can have a small thickness, reducing the weight and volume of the protective member 30 and increasing the energy density of the battery 2.

In some embodiments, a slope is formed on a side of the protective member 30 facing towards the pressure relief hole 111. The slope can guide the flow of gas, reducing the thermal impact to the protective member 30.

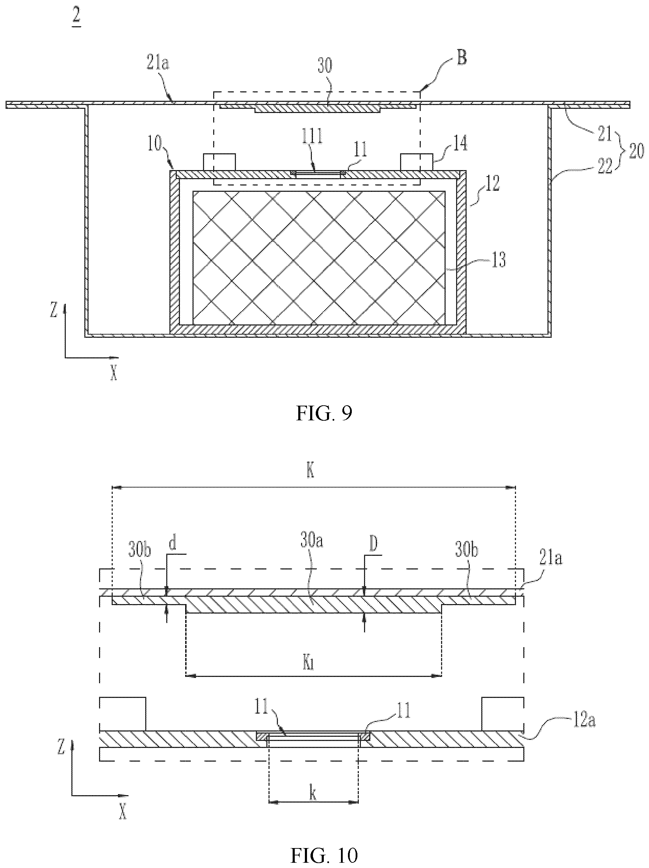

FIG. 9 is a schematic structural diagram of a battery according to some other embodiments of this application; and FIG. 10 is an enlarged schematic view at block B in FIG. 9.

As shown in FIG. 9 and FIG. 10, in some embodiments, the protective member 30 includes a base region 30a and a reinforced region 30b connected to the base region 30a. The dimension of the reinforced region 30b in the axial direction Z is larger than the dimension of the base region 30a in the axial direction Z. In the axial direction Z, the reinforced region 30b covers at least a portion of the pressure relief hole 111.

The reinforced region 30b is opposite the pressure relief hole 111 to withstand great thermal impact, reducing the risk of the protective member 30 being pierced.

In some embodiments, in the axial direction Z, the reinforced region 30b completely covers the pressure relief hole 111. The reinforced region 30b can withstand great thermal impact, thereby reducing the risk of the protective member 30 being pierced. The base region 30a is not opposite the pressure relief hole 111 in the axial direction Z and therefore can have a small thickness, reducing the weight and volume of the protective member 30 and increasing the energy density of the battery 2.

In some embodiments, in a maximum-dimension direction X of the pressure relief hole 111 perpendicular to the axial direction Z, a dimension of the protective member 30 is K, and a dimension of the reinforced region 30b is Ki.

K, Ki, and G satisfy K>Ki and $(K/K_1)/G \leq 2 \times 10^{-1}$ s/L.

A higher flow rate G of the gas generated during thermal runaway of the battery unit 10 means a larger thermal impact caused by the gas released from the battery unit 10 on the protective member 30 and a higher requirement of the protective member 30 on the dimension of the reinforced region 30b. The inventors limit the value of $(K/K_1)/G$ to be less than or equal to $2 \times 10^{-1}$ s/L to allow the reinforced region 30b and the base region 30a to effectively block high-temperature and high-speed substances, so as to reduce heat transferred to the first wall 21a and lower the temperature of the first wall 21a.

In some embodiments, two base regions 30a are provided, and the two base regions 30a are respectively located on two sides of the reinforced region 30b in the maximum-dimension direction X.

In some embodiments, the two base regions 30a are symmetrical about a virtual plane perpendicular to the maximum-dimension direction X.

In some embodiments, both the reinforced region 30b and the base region 30a are flat plate structures, and a thickness direction of the reinforced region 30b and a thickness direction of the base region 30a are both parallel to the axial direction Z.

For example, the thickness of the reinforced region 30b is D.

In some embodiments, a dimension of the reinforced region 30b in the axial direction Z is D, and a dimension of the base region 30a in the axial direction Z is d. In a maximum-dimension direction X of the pressure relief hole 111 perpendicular to the axial direction Z, a dimension of the pressure relief hole 111 is k, and a dimension of the reinforced region 30b is $K_1$. D, d, k, and $K_1$ satisfy $0.04 \leq (K_1/k)/(D/d) \leq 300$.

As the value of $K_1/k$ increases, the reinforced region 30b withstands more thermal impact during thermal runaway of the battery unit 10. As a result, the base region 30a needs to take less protection against thermal runaway. Consequently, the value of D/d may increase. In other words, the thickness of the base region 30a needs to decrease. As the value of $K_1/k$ decreases, the base region 30a needs to take more protection against thermal runaway. Correspondingly, the value of D/d may decrease. In other words, the thickness of the base region 30a needs to increase. When $K_1/k$ is small enough, the base region 30a needs to take much protection against thermal runaway. D/d has a minimum value, meaning that d has a maximum value to meet the thermal runaway preventing requirements of the base region 30a. When $K_1/k$ is large enough, the base region 30a needs to take little protection against thermal runaway. D/d has a maximum value, meaning that d has a minimum value, so as to ensure cost-effectiveness while thermal runaway preventing requirements are met, thereby reducing redundancy designed.

The inventors limit the value of $(K_1/k)/(D/d)$ to 0.04 to 300 so as to reduce redundancy designed for the dimension of the protective member 30 while thermal protection requirements are met, thereby reducing energy density loss of the battery 2 and improving safety of the battery 2.

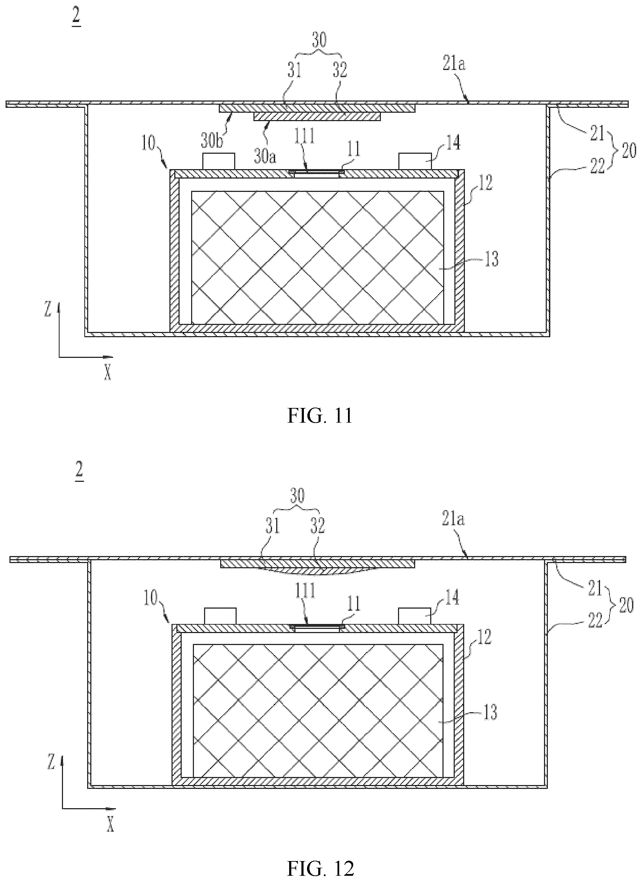

FIG. 11 is a schematic structural diagram of a battery according to some other embodiments of this application.

As shown in FIG. 11, in some embodiments, the protective member 30 includes a first protective plate 31 and a second protective plate 32 stacked in the axial direction Z. A portion of the first protective plate 31 that overlaps the second protective plate 32 in the axial direction Z, together with the second protective plate 32, forms the reinforced region 30b, and a portion of the first protective plate 31 that does not overlap the second protective plate 32 in the axial direction Z forms the base region 30a.

The material of the first protective plate 31 may be the same as or different from the material of the second protective plate 32.

The second protective plate 32 may be provided on a side of the first protective plate 31 facing towards the pressure relief mechanism 11, or may be provided on a side of the first protective plate 31 facing away from the pressure relief mechanism 11.

One or more second protective plates 32 may be provided, and this is not limited in the embodiments of this application.

The second protective plate 32 can be a flat plate having uniform thickness or a plate having non-uniform thickness.

The first protective plate 31 and the second protective plate 32 are stacked together to form the protective member 30 with varying thicknesses. This embodiment can simplify the forming process of the protective member 30.

In some embodiments, the second protective plate 32 is provided on a side of the first protective plate 31 facing towards the pressure relief mechanism 11.

This embodiment can improve the flatness of a side of the protective member 30 facing away from the pressure relief mechanism 11, facilitating the fixation of the protective member 30 to other components.

In some embodiments, both the first protective plate 31 and the second protective plate 32 are flat plate structures, and a thickness direction of the first protective plate 31 and a thickness direction of the second protective plate 32 are both parallel to the axial direction Z.

In some embodiments, a material of the second protective plate 32 is different from a material of the first protective plate 31. With the first protective plate 31 and the second protective plate 32 made of different materials, a protective member 30 with better thermal impact resistance can be composited by combining the features of different materials. Compared with the first protective plate 31 and the second protective plate 32 made of the same material, the first protective plate 31 and the second protective plate 32 made of different materials allow for greater versatility in the structure of the protective member 30.

In some embodiments, the second protective plate 32 has better thermal impact resistance than the first protective plate 31.

In some embodiments, melting point of the second protective plate 32 is higher than melting point of the first protective plate 31. For example, the melting point of the second protective plate 32 is higher than 1000°C. The melting point of the first protective plate 31 is not limited in the embodiments of this application. The melting point of the first protective plate 31 may be higher than, equal to, or lower than 1000°C.

In some embodiments, the second protective plate 32 is adhered to the first protective plate 31.

FIG. 12 is a schematic structural diagram of a battery according to some other embodiments of this application.

As shown in FIG. 12, in some embodiments, the first protective plate 31 is a flat plate structure, and a thickness direction of the first protective plate 31 is parallel to the axial direction Z. In a maximum-dimension direction X of the pressure relief hole 111 perpendicular to the axial direction Z, a dimension of the second protective plate 32 in the axial direction Z gradually decreases from the middle towards two ends.

A largest portion of the second protective plate 32 in the axial direction Z may be opposite the pressure relief hole 111 to withstand great thermal impact, reducing the risk of the protective member 30 being pierced. Two ends of the second protective plate 32 experience small thermal impact and therefore can have a small thickness, reducing the weight and volume of the second protective plate 32 and increasing the energy density of the battery 2.

In some embodiments, a slope is formed on a side of the second protective plate 32 facing towards the pressure relief hole 111. The slope can guide the flow of gas, reducing the thermal impact to the second protective plate 32.

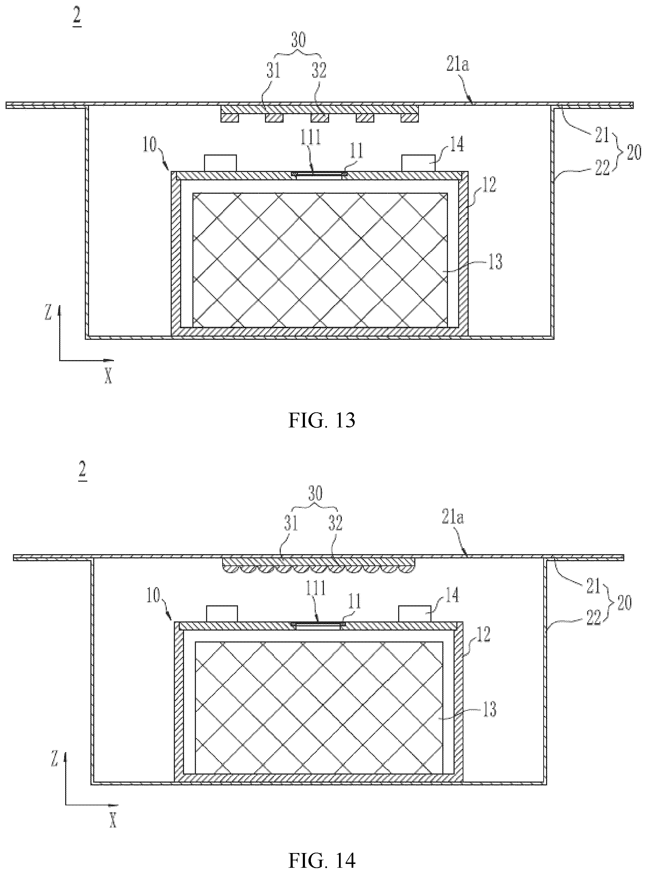

FIG. 13 is a schematic structural diagram of a battery according to some other embodiments of this application.

As shown in FIG. 13, in some embodiments, multiple second protective plates 32 are provided, and the multiple second protective plates 32 are spaced apart.

In some embodiments, the number of second protective plates 32 is the same as the number of reinforced regions 30b.

In some embodiments, the second protective plate 32 is a flat plate structure.

In some embodiments, the multiple second protective plates 32 are spaced apart in a maximum-dimension direction X of the pressure relief hole 111 perpendicular to the axial direction Z.

FIG. 14 is a schematic structural diagram of a battery according to some other embodiments of this application.

As shown in FIG. 14, in some embodiments, multiple second protective plates 32 are provided, and the multiple second protective plates 32 are spaced apart or arranged in a continuous manner.

In some embodiments, the first protective plate 31 is a flat plate structure, and a thickness direction of the first protective plate 31 is parallel to the axial direction Z. In a maximum-dimension direction X of the pressure relief hole 111 perpendicular to the axial direction Z, a dimension of each second protective plate 32 in the axial direction Z gradually decreases from the middle towards two ends.

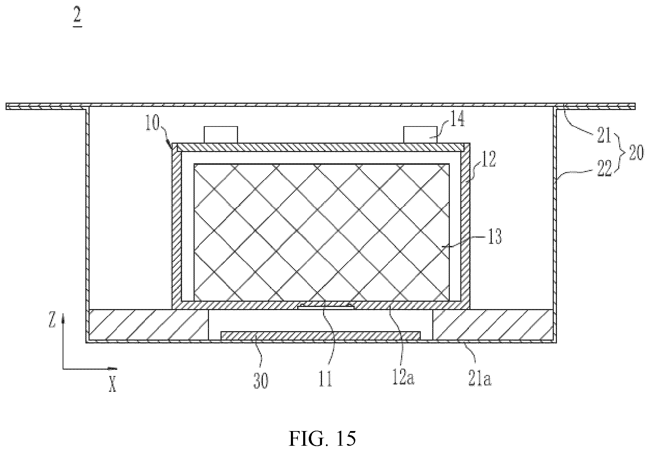

FIG. 15 is a schematic structural diagram of a battery according to some other embodiments of this application.

As shown in FIG. 15, in some embodiments, the first wall 21a may be provided below the battery unit 10.

According to some embodiments of this application, this application further provides an electric apparatus, including the battery according to any one of the foregoing embodiments, where the battery is configured to provide electric energy to the electric apparatus. The electric apparatus may be any one of the foregoing devices or systems using a battery.

According to some embodiments of this application, referring to FIG. 3 to FIG. 7, this application provides a battery 2 including a box 20, a battery unit 10, and a protective member 30. The battery unit 10 is accommodated in the box 20. The box 20 includes a first wall 21a located above the battery unit 10. The battery unit 10 is provided with a pressure relief mechanism 11, and the pressure relief mechanism 11 is configured to form a pressure relief hole 111 for releasing substances inside the battery unit 10.

The protective member 30 is accommodated in the box 20 and fixed to the first wall 21a. At least a portion of the protective member 30 is located between the first wall 21a and the pressure relief mechanism 11 and configured to cover the pressure relief hole 111 in an axial direction Z of the pressure relief hole 111. A dimension of the protective member 30 is larger than a dimension of the pressure relief hole 111 in any direction perpendicular to the axial direction Z.

The portion of the protective member 30 covering the pressure relief hole 111 in the axial direction Z has a minimum dimension of D in the axial direction Z, and a flow rate of gas released from the battery unit 10 through the pressure relief hole 111 is G, where D and G satisfy $2\times10^{-3}$ mm·s/L$\leq$D/G$\leq$3.3$\times10^{-1}$ mm·s/L.

The following further describes this application with reference to examples.

To make the invention objectives, technical solutions, and beneficial technical effects of this application clearer, this application is further described below in detail with reference to examples. However, it should be understood that the examples of this application are merely intended to explain this application, but not to limit this application, and the examples of this application are not limited to the examples given in this specification. In examples in which specific test conditions or operating conditions are not specified, preparation is performed according to conventional conditions or according to conditions recommended by a material supplier.

Example 1

(i) Two identical prismatic battery units were prepared, with each battery unit having a length $l_1$ of 220 mm, a width $l_2$ of 44 mm, and a height $l_3$ of 100 mm.
(ii) The flow rate G of gas discharged by one battery unit through the pressure relief hole was tested, G being 500 L/s.
(iii) The other battery unit was placed in a sealed box and a protective member was attached to the wall (referred to as the first wall) of the box above the battery unit. The protective member was opposite the pressure relief mechanism of the battery unit and covered the pressure relief hole. The protective member was a flat plate with a thickness D of 1 mm, made of a composite plate composed of boron nitride and carbon fiber. The distance h between the protective member and the pressure relief hole in the axial direction of the pressure relief hole was 15 mm.
(iv) Thermal runaway of the battery unit in the box was triggered to cause the battery unit to form a pressure relief hole and release substances outward. During thermal runaway of the battery unit, the temperature at multiple points on the surface of the protective member facing away from the battery unit was tested, and the highest temperature $T_1$ on the surface of the protective member facing away from the battery unit was recorded.
(v) After the thermal runaway of the battery unit ended, the box was opened to check whether the protective member was pierced.

Examples 2-9: The test methods of Examples 2-9 followed that of Example 1, with the differences between Examples 2-9 and Example 1 shown in Table 1. For example, the flow rate G of the battery unit could be changed by changing the chemical system of the battery unit.
Comparative Examples 1-4: The test methods of Comparative Examples 1-4 followed that of Example 1, with the differences between Comparative Examples 1-4 and Example 1 shown in Table 1.

**Table 1**

| | G (L/s) | D (mm) | D/G (mm·s/L) | $T_1$ (°C) | Pierced? |
|---|---|---|---|---|---|
| Example 1 | 500 | 1 | $2\times10^{-3}$ | 821 | No |
| Example 2 | 500 | 3 | $6\times10^{-3}$ | 749 | No |
| Example 3 | 500 | 6 | $12\times10^{-3}$ | 667 | No |
| Example 4 | 500 | 9 | $18\times10^{-1}$ | 497 | No |
| Example 5 | 200 | 4 | $20\times10^{-3}$ | 486 | No |
| Example 6 | 200 | 6 | $30\times10^{-3}$ | 454 | No |
| Example 7 | 15 | 1.5 | $100\times10^{-3}$ | 432 | No |
| Example 8 | 15 | 3 | $200\times10^{-3}$ | 387 | No |
| Example 9 | 15 | 5 | $333\times10^{-3}$ | 351 | No |
| Comparative Example 1 | 500 | 0.5 | $1\times10^{-3}$ | 1388 | Yes |
| Comparative Example 2 | 500 | 0.9 | $1.8\times10^{-3}$ | 1088 | Yes |
| Comparative Example 3 | 15 | 6 | $400\times10^{-3}$ | 329 | No |
| Comparative Example 4 | 15 | 7.5 | $500\times10^{-3}$ | 307 | No |

With reference to Examples 1-9 and Comparative Examples 1 and 2, the embodiments of this application limit the value of D/G to be greater than or equal to $2\times10^{-3}$ mm·s/L, which can reduce the risk of the protective member being pierced to meet the thermal protection requirements of the battery.

With reference to Examples 1-9 and Comparative Examples 3 and 4, the protective member can block heat conduction to reduce the heat transferred to the box, thereby lowering the temperature of the box. When D/G reaches a certain level, the box can meet the temperature requirements. In the embodiments, the value of D/G is limited to be less than or equal to $3.3\times10^{-1}$ mm•s/L to reduce redundancy designed for the dimension of the protective member, thereby reducing energy density loss of the battery and improving safety of the battery.

Example 10

(i) A prismatic battery unit was prepared, where the battery unit has a length $l_1$ of 220 mm, a width $l_2$ of 44 mm, and a height $l_3$ of 100 mm. The volumetric energy density E of the battery unit was 500 Wh/L.
(ii) The battery unit was placed in a sealed box and a protective member was attached to the first wall of the box above the battery unit. The protective member was opposite the pressure relief mechanism of the battery unit and covered the pressure relief hole. The protective member was a flat plate with a thickness D of 5 mm, made of a composite plate composed of boron nitride and carbon fiber. The distance h between the protective member and the pressure relief hole in the axial direction of the pressure relief hole was 15 mm.
(iii) Thermal runaway of the battery unit in the box was triggered to cause the battery unit to form a pressure relief hole and release substances outward. During thermal runaway of the battery unit, the temperature at multiple points on the surface of the protective member facing away from the battery unit was tested, and the highest temperature $T_1$ on the surface of the protective member facing away from the battery unit was recorded.
(iv) After the thermal runaway of the battery unit ended, the box was opened to check whether the protective member was pierced.

Examples 11-15: The test methods of Examples 11-15 followed that of Example 10, with the differences between Examples 11-15 and Example 10 shown in Table 2. For example, the volumetric energy density E of the battery unit could be changed by changing the chemical system of the battery unit.
Comparative Examples 5-8: The test methods of Comparative Examples 5-8 followed that of Example 10, with the differences between Comparative Examples 5-8 and Example 10 shown in Table 2.

**Table 2**

|  | E (Wh/L) | D (mm) | D/E (mm•L/Wh) | $T_1$ (°C) | Pierced? |
|---|---|---|---|---|---|
| Example 10 | 500 | 5 | $10\times10^{-3}$ | 401 | No |
| Example 11 | 500 | 4 | $8\times10^{-3}$ | 464 | No |
| Example 12 | 500 | 3 | $6\times10^{-3}$ | 530 | No |
| Example 13 | 500 | 2 | $4\times10^{-3}$ | 611 | No |
| Example 14 | 500 | 1 | $2\times10^{-3}$ | 664 | No |
| Example 15 | 500 | 0.5 | $1\times10^{-3}$ | 706 | No |
| Comparative Example 5 | 500 | 0.4 | $0.8\times10^{-3}$ | 788 | Yes |
| Comparative Example 6 | 500 | 0.3 | $0.6\times10^{-3}$ | 967 | Yes |
| Comparative Example 7 | 500 | 6 | $12\times10^{-3}$ | 376 | No |
| Comparative Example 8 | 500 | 8 | $16\times10^{-3}$ | 349 | No |

With reference to Examples 10-15 and Comparative Examples 5 and 6, the embodiments of this application limit the value of D/E to be greater than or equal to $1\times10^{-3}$ mm•L/Wh, which can reduce the risk of the protective member being pierced to meet the thermal protection requirements of the battery.
With reference to Examples 10-15 and Comparative Examples 7 and 8, the protective member can block heat conduction to reduce the heat transferred to the box, thereby lowering the temperature of the box. When D/E reaches a certain level, the box can meet the temperature requirements. In the embodiments, the value of D/E is limited to be less than or equal to $10\times10^{-3}$ mm•L/Wh to reduce redundancy designed for the dimension of the protective member, thereby reducing energy density loss of the battery and improving safety of the battery.

Example 16

(i) Two identical prismatic battery units were prepared, with each battery unit having a length $l_1$ of 220 mm, a width $l_2$ of 44 mm, and a height $l_3$ of 100 mm.

(ii) The flow rate G of gas discharged by one battery unit through the pressure relief hole was tested, G being 200 L/s. The dimension k of the pressure relief hole was 60 mm in the maximum-dimension direction of the pressure relief hole perpendicular to the axial direction.

(ii) The other battery unit was placed in a sealed box and a protective member was attached to the first wall of the box above the battery unit. The protective member was opposite the pressure relief mechanism of the battery unit and covered the pressure relief hole. The protective member was a flat plate with a thickness D of 2 mm, made of a composite plate composed of boron nitride and carbon fiber. The distance h between the protective member and the pressure relief hole in the axial direction of the pressure relief hole was 15 mm. The dimension K of the protective member was 180 mm in the maximum-dimension direction of the pressure relief hole.

(iv) Thermal runaway of the battery unit in the box was triggered to cause the battery unit to form a pressure relief hole and release substances outward. During the thermal runaway of the battery unit, the temperature of a region of the first wall was tested, and the highest temperature $T_2$ was recorded, where the region was close to edge of the protective member in the maximum-dimension direction and was not covered by the protective member.

(v) After the thermal runaway of the battery unit ended, the box was opened to check whether the protective member was pierced.

Examples 17-22: The test methods of Examples 17-22 followed that of Example 16, with the differences between Examples 17-22 and Example 16 shown in Table 3. For example, the flow rate G of the battery unit could be changed by changing the chemical system of the battery unit.

Comparative Examples 9-11: The test methods of Comparative Examples 9-11 followed that of Example 16, with the differences between Comparative Examples 9-11 and Example 16 shown in Table 3.

**Table 3**

| | G (L/s) | K (mm) | k (mm) | (K/k)/G (s/L) | $T_2$ (°C) | Pierced? |
|---|---|---|---|---|---|---|
| Example 16 | 200 | 180 | 60 | $15\times10^{-3}$ | 386 | No |
| Example 17 | 200 | 150 | 60 | $12.5\times10^{-3}$ | 427 | No |
| Example 18 | 200 | 96 | 60 | $8\times10^{-3}$ | 563 | No |
| Example 19 | 200 | 78 | 60 | $6.5\times10^{-3}$ | 635 | No |
| Example 20 | 200 | 72 | 60 | $6\times10^{-3}$ | 677 | No |
| Example 21 | 300 | 72 | 60 | $4\times10^{-3}$ | 698 | No |
| Example 22 | 400 | 72 | 60 | $3\times10^{-3}$ | 711 | No |
| Comparative Example 9 | 200 | 60 | 60 | $5\times10^{-3}$ | 766 | No |
| Comparative Example 10 | 500 | 72 | 60 | $2.4\times10^{-3}$ | 797 | No |
| Comparative Example 11 | 500 | 60 | 60 | $2\times10^{-3}$ | 835 | No |

With reference to Examples 16-22 and Comparative Example 9, when K=k, the part of the gas released through the pressure relief hole may disperse and act on the region of the first wall not covered by the protective member, causing a high temperature of the first wall. The embodiments of this application preferably make K greater than k to increase the protection range of the protective member, thereby reducing the risk of gas directly hitting the first wall, lowering the temperature of the first wall, and improving safety.

With reference to Examples 16-22 and Comparative Examples 10 and 11, the embodiments of this application limit the value of (K/k)/G to be greater than or equal to $3\times10^{-3}$ s/L, to make the temperature of the part of the first wall not covered by the protective member fall within a certain range so as to reduce the risk of damage to the first wall.

Example 23

(i) Two identical prismatic battery units were prepared, with each battery unit having a length $l_1$ of 220 mm, a width $l_2$ of 44 mm, and a height $l_3$ of 100 mm.

(ii) The flow rate G of gas discharged by one battery unit through the pressure relief hole was tested, G being 15 L/s. The dimension k of the pressure relief hole was 50 mm in the maximum-dimension direction of the pressure relief hole perpendicular to the axial direction.

(ii) The other battery unit was placed in a sealed box and a protective member was attached to the first wall of the box above the battery unit. The protective member was opposite the pressure relief mechanism of the battery unit and covered the pressure relief hole. The protective member was a structure reinforced in the middle, meaning that the protective member included the reinforced region in the middle and base regions on two sides, the reinforced region having a thickness D of 2 mm and the base region having a thickness of 1 mm. The protective member was made of a composite plate composed of boron nitride and carbon fiber. In the axial direction of the pressure relief hole, the reinforced region was right opposite the pressure relief hole, and the distance h between the reinforced region and the pressure relief hole was 15 mm. In the maximum-dimension direction of the pressure relief hole, the dimension K of the protective member was 180 mm, the dimension $K_1$ of the reinforced region was 60 mm, and the dimension of each base region was 60 mm.

(iv) Thermal runaway of the battery unit in the box was triggered to cause the battery unit to form a pressure relief hole and release substances outward. During thermal runaway of the battery unit, the temperature at multiple points on the surface of the base region facing away from the battery unit were tested, and the highest temperature $T_3$ on the surface of the base region facing away from the battery unit.

(v) After the thermal runaway of the battery unit ended, the box was opened to check whether the protective member was pierced.

Examples 24 and 25: The test methods of Examples 24 and 25 followed that of Example 23, with the differences between Examples 24 and 25 and Example 23 shown in Table 4.

Comparative Examples 12 and 13: The test methods of Comparative Examples 12 and 13 followed that of Example 23, with the differences between Comparative Examples 12 and 13 and Example 23 shown in Table 4.

**Table 4**

|  | G (L/s) | K (mm) | $K_1$ (mm) | $(K/K_1)/G$ (s/L) | $T_2$ (°C) | Pierced? |
|---|---|---|---|---|---|---|
| Example 23 | 15 | 180 | 60 | $200 \times 10^{-3}$ | 539 | No |
| Example 24 | 15 | 180 | 90 | $133 \times 10^{-3}$ | 499 | No |
| Example 25 | 15 | 180 | 120 | $100 \times 10^{-3}$ | 437 | No |
| Comparative Example 12 | 15 | 180 | 45 | $260 \times 10^{-3}$ | 601 | No |
| Comparative Example 13 | 15 | 180 | 30 | $400 \times 10^{-3}$ | 712 | No |

With reference to Examples 24 and 25 and Comparative Examples 12 and 13, the embodiments of this application limit the value of $(K/K_1)/G$ to be less than or equal to $2 \times 10^{-1}$ s/L to allow the reinforced region and the base region to block high-temperature and high-speed substances, so as to reduce heat transferred to the first wall and lower the temperature of the first wall.

It should be noted that, without conflict, the embodiments and features in the embodiments in this application may be combined with each other.

In conclusion, it should be noted that the foregoing embodiments are merely intended for describing the technical solutions of this application, but not for limiting this application. Although this application is described in detail with reference to the foregoing embodiments, persons of ordinary skills in the art should understand that they may still make modifications to the technical solutions described in the foregoing embodiments or make equivalent replacements to some technical features thereof, without departing from the spirit and scope of the technical solutions of the embodiments of this application.

**Claims**

1. A battery, comprising:

   a box comprising a first wall;
   a battery unit accommodated within the box, wherein the battery unit is provided with a pressure relief mechanism, and the pressure relief mechanism is configured to form a pressure relief hole for releasing substances inside the battery unit; and
   a protective member accommodated within the box, wherein at least a portion of the protective member is located between the first wall and the pressure relief mechanism and configured to cover the pressure relief hole in an axial direction of the pressure relief hole, wherein
   the portion of the protective member covering the pressure relief hole in the axial direction has a minimum dimension of D in the axial direction, and a flow rate of gas released from the battery unit through the pressure relief hole is G, wherein D and G satisfy

$$2\times10^{-3} \text{ mm}\cdot\text{s/L} \leq D/G \leq 3.3\times10^{-1} \text{ mm}\cdot\text{s/L}.$$

2. The battery according to claim 1, wherein D and G satisfy

$$2\times10^{-3} \text{ mm}\cdot\text{s/L} \leq D/G \leq 2\times10^{-1} \text{ mm}\cdot\text{s/L}.$$

3. The battery according to claim 1 or 2, wherein a value of D is 0.5 mm to 5 mm.

4. The battery according to any one of claims 1 to 3, wherein a dimension of the protective member is larger than a dimension of the pressure relief hole in any direction perpendicular to the axial direction.

5. The battery according to any one of claims 1 to 4, wherein volumetric energy density of the battery unit is E, wherein D and E satisfy

$$1\times10^{-3} \text{ mm}\cdot\text{L/Wh} \leq D/E \leq 1\times10^{-2} \text{ mm}\cdot\text{L/Wh}.$$

6. The battery according to claim 5, wherein D and E satisfy

$$1\times10^{-3} \text{ mm}\cdot\text{L/Wh} \leq D/E \leq 6\times10^{-3} \text{ mm}\cdot\text{L/Wh}.$$

7. The battery according to any one of claims 1 to 6, wherein a dimension of the pressure relief hole in a maximum-dimension direction of the pressure relief hole perpendicular to the axial direction is k, and a dimension of the protective member in the maximum-dimension direction is K, wherein k, K, and G satisfy

$$K > k \text{ and } (K/k)/G \geq 3\times10^{-3} \text{ s/L}.$$

8. The battery according to claim 7, wherein k, K, and G satisfy

$$(K/k)/G \geq 8\times10^{-3} \text{ s/L}.$$

9. The battery according to claim 7 or 8, wherein k, K, and G satisfy

$$(K/k)/G \leq 20 \text{ s/L}.$$

10. The battery according to any one of claims 1 to 9, wherein a minimum distance between the protective member and the pressure relief hole in the axial direction is h, wherein h and D satisfy

$$0.2 \leq h/D \leq 250.$$

11. The battery according to any one of claims 1 to 10, wherein the protective member is a flat plate structure, and a thickness direction of the protective member is parallel to the axial direction.

12. The battery according to any one of claims 1 to 10, wherein in a maximum-dimension direction of the pressure relief hole perpendicular to the axial direction, thickness of the protective member gradually decreases from the middle towards two ends, and a thickness direction of the protective member is parallel to the axial direction; and
a thickest portion of the protective member covers at least a portion of the pressure relief hole in the axial direction.

13. The battery according to any one of claims 1 to 10, wherein the protective member comprises a base region and a reinforced region connected to the base region, and a dimension of the reinforced region in the axial direction is larger than a dimension of the base region in the axial direction; and
in the axial direction, the reinforced region covers at least a portion of the pressure relief hole.

14. The battery according to claim 13, wherein the reinforced region completely covers the pressure relief hole in the axial direction.

15. The battery according to claim 14, wherein

in a maximum-dimension direction of the pressure relief hole perpendicular to the axial direction, a dimension of the protective member is K, and a dimension of the reinforced region is Ki; wherein
K, Ki, and G satisfy

$$K > K_1 \text{ and } (K/K_1)/G \leq 2 \times 10^{-1} \text{ s/L}.$$

16. The battery according to claim 14 or 15, wherein both the reinforced region and the base region are flat plate structures, and a thickness direction of the reinforced region and a thickness direction of the base region are both parallel to the axial direction.

17. The battery according to claim 16, wherein a dimension of the reinforced region in the axial direction is D, and a dimension of the base region in the axial direction is d;
in a maximum-dimension direction of the pressure relief hole perpendicular to the axial direction, a dimension of the pressure relief hole is k, and a dimension of the reinforced region is Ki; and

$$D, d, k, \text{ and } K_1 \text{ satisfy } 0.04 \leq (K_1/k)/(D/d) \leq 300.$$

18. The battery according to any one of claims 13 to 17, wherein the protective member comprises a first protective plate and a second protective plate stacked in the axial direction, wherein a portion of the first protective plate that overlaps the second protective plate in the axial direction, together with the second protective plate, forms the reinforced region, and a portion of the first protective plate that does not overlap the second protective plate in the axial direction forms the base region.

19. The battery according to claim 18, wherein the second protective plate is provided on a side of the first protective plate facing towards the pressure relief mechanism.

20. The battery according to claim 18 or 19, wherein multiple second protective plates are provided, and the multiple second protective plates are spaced apart.

21. The battery according to claim 20, wherein the multiple second protective plates are spaced apart in a maximum-dimension direction of the pressure relief hole perpendicular to the axial direction.

22. The battery according to any one of claims 18 to 21, wherein both the first protective plate and the second protective plate are flat plate structures, and a thickness direction of the first protective plate and a thickness direction of the second protective plate are both parallel to the axial direction.

23. The battery according to any one of claims 18 to 21, wherein the first protective plate is a flat plate structure, and a thickness direction of the first protective plate is parallel to the axial direction; and
in a maximum-dimension direction of the pressure relief hole perpendicular to the axial direction, a dimension of the second protective plate in the axial direction gradually decreases from the middle towards two ends.

24. The battery according to any one of claims 18 to 23, wherein a material of the second protective plate is different from a material of the first protective plate.

25. The battery according to any one of claims 1 to 24, wherein the first wall is located above or below the battery unit.

26. The battery according to any one of claims 1 to 25, wherein melting point of the protective member is higher than 1000°C.

27. The battery according to any one of claims 1 to 26, wherein melting point of the protective member is higher than melting point of the first wall.

28. The battery according to any one of claims 1 to 27, wherein the protective member is fixed to the first wall.

29. The battery according to claim 28, wherein the protective member is adhered, welded, fastener-connected, or snap-fit to the first wall.

30. An electric apparatus comprising the battery according to any one of claims 1 to 29, wherein the battery is configured to supply electric energy.

<u>1</u>

FIG. 1

<u>2</u>

FIG. 2

2

K

D

30

21a

10

12a

11

14

21
22
20

12

13

Z

X

FIG. 3

2

30

A

21a

10

111

11

14

21
22
20

12

13

Z

X

FIG. 4

FIG. 5

FIG. 6

2

FIG. 7

2

FIG. 8

FIG. 9

FIG. 10

FIG. 11

FIG. 12

FIG. 13

FIG. 14

FIG. 15

<table>
<tr><td colspan="2"><strong>INTERNATIONAL SEARCH REPORT</strong></td><td>International application No.<br><strong>PCT/CN2022/105942</strong></td></tr>
</table>

**A.    CLASSIFICATION OF SUBJECT MATTER**

H01M 50/375(2021.01)i;  H01M 50/20(2021.01)i;  H01M 50/30(2021.01)i;  H01M 50/244(2021.01)i

According to International Patent Classification (IPC) or to both national classification and IPC

**B.    FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNPAT, CNKI, WPI, EPODOC: 电池, 电芯, 泄压, 防爆, 防护, 保护, 导流, 壁, 壳, 厚, 流量, 流速, 压力, battery, explosion proof, pressure release, pressure relief, protect+, wall, hous+, cas+, thick+, flow, pressure

**C.    DOCUMENTS CONSIDERED TO BE RELEVANT**

| Category* | Citation of document, with indication, where appropriate, of the relevant passages | Relevant to claim No. |
|---|---|---|
| X | CN 211907477 U (EVE ENERGY CO., LTD.) 10 November 2020 (2020-11-10)<br>description, paragraphs [0003]-[0038], and figures 1-4 | 1-4, 7-11, 25-30 |
| A | CN 213026308 U (NINGDE CONTEMPORARY AMPEREX TECHNOLOGY CO., LTD.)<br>20 April 2021 (2021-04-20)<br>entire document | 1-30 |
| A | CN 216720203 U (ZHONGCHUANG XINHANG TECHNOLOGY CO., LTD.) 10 June 2022<br>(2022-06-10)<br>entire document | 1-30 |
| A | CN 114175363 A (NINGDE CONTEMPORARY AMPEREX TECHNOLOGY CO., LTD.)<br>11 March 2022 (2022-03-11)<br>entire document | 1-30 |
| A | WO 2022104548 A1 (CONTEMPORARY AMPEREX TECHNOLOGY CO., LTD.) 27 May<br>2022 (2022-05-27)<br>entire document | 1-30 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **04 December 2022** | **16 December 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

| INTERNATIONAL SEARCH REPORT | | International application No. |
| --- | --- | --- |
| Information on patent family members | | **PCT/CN2022/105942** |

| Patent document cited in search report | | | Publication date (day/month/year) | Patent family member(s) | | | Publication date (day/month/year) |
| --- | --- | --- | --- | --- | --- | --- | --- |
| CN | 211907477 | U | 10 November 2020 | None | | | |
| CN | 213026308 | U | 20 April 2021 | None | | | |
| CN | 216720203 | U | 10 June 2022 | CN | 114374049 | A | 19 April 2022 |
| CN | 114175363 | A | 11 March 2022 | US | 2022013849 | A1 | 13 January 2022 |
| | | | | WO | 2022006895 | A1 | 13 January 2022 |
| | | | | EP | 3965213 | A1 | 09 March 2022 |
| | | | | EP | 3965213 | A4 | 09 March 2022 |
| | | | | KR | 20220095224 | A | 06 July 2022 |
| WO | 2022104548 | A1 | 27 May 2022 | EP | 4064437 | A1 | 28 September 2022 |

Form PCT/ISA/210 (patent family annex) (January 2015)